# EUROPEAN PATENT SPECIFICATION

(11) **EP 1 031 493 B1**
(45) Date of publication and mention of the grant of the patent: **02.08.2006**
(21) Application number: 98951705.7
(22) Date of filing: 06.11.1998
(51) Int. Cl.: B62D 6/00

(54) **A STEERING DEVICE FOR VEHICLES**
STEUERUNGSSYSTEM FÜR FAHRZEUGE
LEVIER DE DIRECTION POUR VEHICULES

(30) Priority: 12.11.1997 JP 32960397
(43) Date of publication of application: 30.08.2000
(73) Proprietor: JTEKT Corporation, Osaka-shi Osaka 542-8502 (JP)
(72) Inventor: NAKANO, Shiro, Koyo Seiko Co., Ltd., Osaka-shi, Osaka 542-8502 (JP); NISHIZAKI, Katsutoshi, Koyo Seiko Co., Ltd., Osaka-shi, Osaka 542-8502 (JP); SEGAWA, Masaya, Koyo Seiko Co., Ltd., Osaka-shi, Osaka 542-8502 (JP); MAEDA, Naoki, Koyo Seiko Co., Ltd., Osaka-shi, Osaka 542-8502 (JP); TAKAMATSU, Takanobu, Koyo Seiko Co., Ltd., Osaka-shi, Osaka 542-8502 (JP)
(74) Representative: Hering, Hartmut
(86) International application number: PCT/JP1998/004991
(87) International publication number: WO 1999/024307

(56) References cited:
- EP-A- 0 787 642
- WO-A-93/08063
- DE-A- 19 536 989
- DE-C- 19 605 553
- JP-A- 3 096 481
- JP-A- 3 217 373
- JP-A- 5 178 225

## Description

The present invention relates to a steering device linked to the behavior stabilizing system in vehicles as set out in the preamble of claim 1.

In the case of a vehicle spinning or drifting due to excessive speed or poor driving when traversing curves, it becomes impossible to steer the vehicle according to the driver's intent.

Technology to control the braking force and driving force of the vehicle is being developed in order to prevent unstable vehicle behavior such as drifting or spinning as known from EP-A-0 787 642.

However, the control of the braking force and driving force to stabilize vehicle behavior is effected irrespective of the driver's will; the problem with this is that the steering feel becomes bad because the steering torque is fluctuated on the basis of the change in the braking force and driving force.

It is an object of the present invention to provide a steering device that resolves the above-mentioned problem.

According to the present invention there is provided a steering device for a vehicle as set out in claim 1.

With this constitution, when vehicle behavior is stabilized by controlling at least one of the braking force and driving force of the wheels, bad steering feel can be prevented by canceling out the change in the steering torque due to the control for the stabilization. This control for the stabilization of vehicle behavior can be performed by using known means.

Furtheron, in the case where at least one of the braking force and driving force is controlled in order to stabilize the vehicle behavior, the change in the steering torque based on the change in at least one of the braking force and driving force can be smoothly canceled out by controlling the torque added to the torque for steering applied by the driver.

The variables corresponding to the change in at least one of the braking force and driving force due to the control for the stabilization can be determined as the amount of change from the start of the control for the stabilization in, for example, the braking force of each wheel, rotational speed of each wheel, vehicle speed, steering angle, coefficient of friction between the vehicle and road surface, yaw rate of the vehicle, and so on. The change in the steering torque can be canceled out with better precision as more types of variables are determined.

The relationship between the variables and the change in the steering torque is established so that the change in the steering torque can be determined from the variables determined according to this relationship. The change in the steering torque can be canceled out when the actuator generates torque with an equal magnitude but opposite direction to the change in the steering torque due to the control for the stabilization.

In order to stabilize the vehicle behavior by preventing the vehicle from being oversteered and spinning out, a moment directed opposite to the steering direction of the vehicle is caused to act on the vehicle, for example by making the braking force of the outer wheels greater than the braking force of the inner wheels. In this case, the steering torque is changed so as to cause steering in the direction opposite to the moment acting on the vehicle for the stabilization. Such change in the steering torque acting on the driver can therefore be canceled out by adding the steering assistance torque having the same direction as that moment by means of the actuator.

In order to stabilize the vehicle behavior by preventing the vehicle from being understeered and drifting, a moment with the same direction as the steering direction of the vehicle is caused to act on the vehicle, for example by making the braking force of the inner wheels greater than the braking force of the outer wheels. In this case, the steering torque is changed so as to cause steering in the direction opposite to the moment acting on the vehicle for the stabilization. Such change in the steering torque acting on the driver can therefore be canceled out by adding the steering assistance torque having the same direction as that moment by means of the actuator.

The present invention provides a steering device which can improve the steering feel by eliminating fluctuations in steering torque due to the control for the stabilization.

### BRIEF DESCRIPTION OF THE DRAWINGS

- Figure 1: is a diagram to depict the constitution of the steering device relating to the embodiment of the present invention;
- Figure 2: is a diagram to depict the driving of the vehicle; and
- Figure 3: is a flow chart showing the procedures for controlling the steering device relating to the embodiment of the present invention.

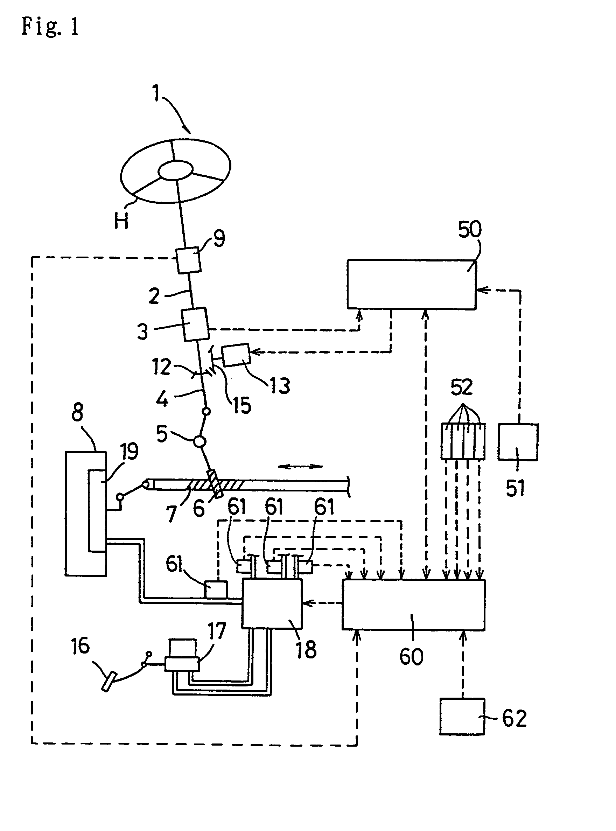

An embodiment of the present invention are explained below with reference to the drawings.
A rack and pinion type power steering device 1 shown in Figure 1 comprises an input shaft 2 connected to a steering wheel H and an output shaft 4 connected to the input shaft 2 via a torque sensor 3. The input shaft 2 and output shaft 4 constitute a steering shaft for transmitting torque for steering applied by the driver to wheels. The output shaft 4 is connected to a pinion 6 via a universal joint 5. The wheels 8 are connected to the rack 7 that engages with the pinion 6. When steering torque is transmitted to the rack 7 via the steering wheel H, input shaft 2, torque sensor 3, output shaft 4, and pinion 6, the vehicle is steered by the movement of the rack 7. Also, a steering angle sensor 9 is mounted on the input shaft 2. The front wheels are steered in this embodiment; alternatively the front and rear wheels may be steered.

A bevel gear 12 is fit around the outer periphery of the output shaft 4. A bevel gear 15 that engages with the bevel gear 12 is caused to rotate by the actuator 13. The actuator 13 thereby generates a torque to be added to the torque applied by the driver.

A braking system is established to brake each wheel 8 of the vehicle. Specifically, the braking pressure corresponding to the foot power on the brake pedal 16 is generated by a master cylinder 17. That braking pressure is amplified by a braking pressure control unit 18 and distributed to braking devices 19 for each wheel 9. Each braking device 19 applies the braking force to the corresponding wheel 8 based on the braking pressure distributed thereto. The braking pressure control unit 18 is connected to a brake system controller 60 constituted by a computer. A sensor 9 for detecting the steering angle, sensors 52 for detecting the rotational speed of each wheel 8, sensors 61 for detecting the braking force for each wheel 8, and a sensor 62 for detecting the coefficient of friction between the vehicle and the road surface are connected to the brake system controller 60. The brake system controller 60 controls the braking pressure control unit 18 so that the braking pressure can be amplified and distributed according to the rotational speed of each wheel 8 detected by each sensor 52 and the feedback value determined from the braking force detected by each sensor 61. It is thereby possible to control the braking force for the wheels on the left side of the vehicle separately from the braking force for the wheels on the right side of the vehicle.

The braking pressure control unit 18 is able to generate braking pressure with a self-contained pump, even when the brake pedal 16 is not being operated.

The torque sensor 3 detects the torque transmitted from the input shaft 2 to the output shaft 4, i.e. detects the steering torque transmitted by the steering shaft. The torque sensor 3 is connected to a steering system controller 50 constituted by a computer. The actuator 13, a vehicle speed sensor 51, and the brake system controller 60 are connected to the steering system controller 50.

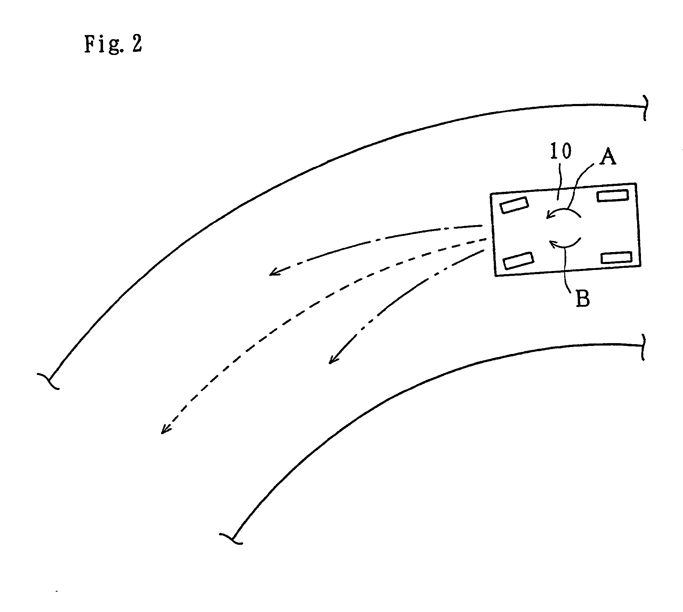

The brake system controller 60 controls the braking force for the wheels 8 for stabilization of vehicle behavior. This control for the stabilization of vehicle behavior can be performed by using known means. For example, relationship between variables that are correlated with vehicle behaviors, such as vehicle speed, steering angle, rotational speed of each wheel, coefficient of friction between the vehicle and road surface, yaw rate of the vehicle, and braking force of each wheel, and moment that causes the vehicle to spin or drift is predetermined based on experimentation, and then the relationship is stored. The moment that causes the vehicle to spin or drift is determined from the values detected by the sensors for the variables correlated to the vehicle behavior and the relationship stored. It is determined based on the moment whether there is a risk of the spin or drift. In the case where there is such a risk, the braking force is controlled so that a moment directed opposite to that moment is caused to act on the vehicle. As shown in Figure 2, the vehicle 10 follows the ideal path shown by the dotted line as desired by the driver when the behavior of the vehicle 10 is stable during steering. On the other hand, when the vehicle behavior becomes unstable and then the vehicle spins due to the moment shown by the arrow A after oversteering as shown by the two-dot chain line, the vehicle behavior can be stabilized by making the braking force for the outer wheels greater than the braking force for the inner wheels so as to generate a moment shown by the arrow B. Also, when the vehicle behavior becomes unstable and then the vehicle drifts due to the moment shown by the arrow B after understeering as shown by the one-dot chain line, the vehicle behavior can be stabilized by making the braking force for the inner wheels greater than the braking force for the outer wheels so as to generate a moment shown by the arrow A.

Variables corresponding to change in the braking force due to the control for the stabilization can be determined as the amount of change from the start of the control for the stabilization in, for example, the braking force of each wheel 8 detected by the sensors 61, vehicle speed detected by the sensor 51, steering angle detected by the sensor 9, rotational speed of each wheel 8 detected by the sensors 52, and coefficient of friction between the vehicle and road surface detected by the sensor 62. In addition, the variables can be determined as the amount of change in the vehicle yaw rate from the start of the control for the stabilization. The change in the steering torque can be canceled out with better precision as more types of variables are determined.

The steering system controller 50 stores the relationship between the variables and the change in the steering torque. This relationship is established so that the change in the steering torque can be determined from the variables determined according to this relationship, and can be determined based on experimentation.

The steering system controller 50 calculates the change in the steering torque based on the change in the braking force due to the control for the stabilization on the basis of the variables determined and the relationship stored. The steering torque is controlled by controlling the torque added by the actuator 13 so that the change in the steering torque is canceled out. Specifically, the change in the steering torque is canceled when the actuator 13 generates torque with an equal magnitude but an opposite direction to the change in the steering torque due to the control for the stabilization. For example, when the braking force is controlled so that a moment acts on the vehicle for the stabilization of vehicle behavior as noted above, steering assistance torque with the same direction as that moment is added by the actuator 13. Specifically, in the case where a moment shown by arrow B is caused to act to prevent the vehicle from spinning for the stabilization of vehicle behavior, the steering torque is changed so as to steer the vehicle in a direction opposite to that moment, steering assistance torque with the same direction as the moment shown by arrow B is thereby added by the actuator 13. In the case where a moment shown by the arrow A is caused to act to prevent the vehicle from drifting for the stabilization of vehicle behavior, the steering torque is changed so as to steer the vehicle in a direction opposite to that moment, a steering assistance torque with the same direction as the moment shown by arrow A is thereby added by the actuator 13.

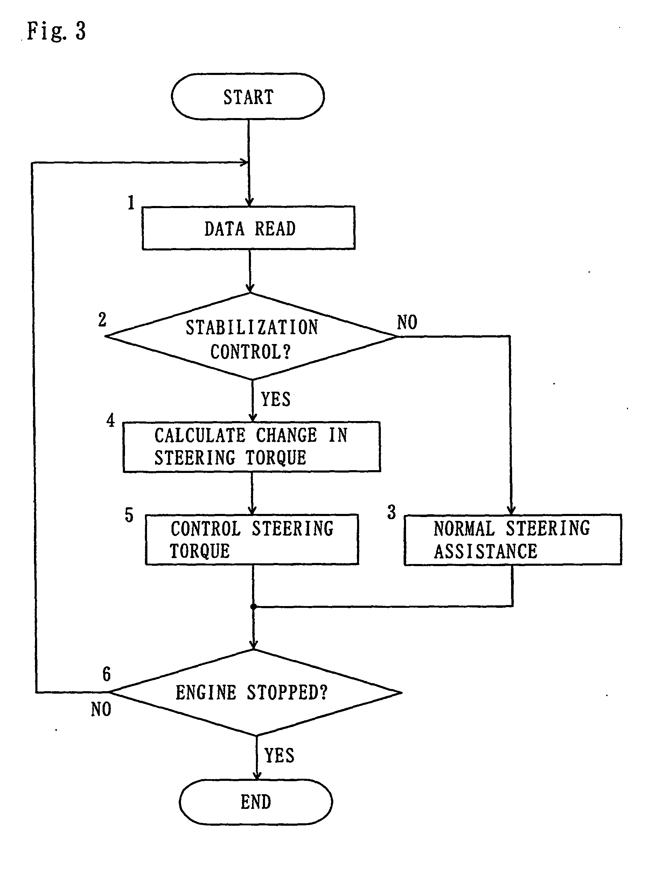

The flow chart in Figure 3 shows the control procedures for the above-mentioned system.
First, the steering system controller 50 and brake system controller 60 read data detected by the above-mentioned sensors (Step 1).

Next, it is determined whether the braking force is controlled for the stabilization of vehicle behavior (Step 2). This determination is made based on whether the braking force control is being performed to prevent spin or drift as discussed above.

If there is no such control for the stabilization, a normal steering assistance force is applied according to the detected steering torque and vehicle speed by controlling the actuator 13 with the steering system controller 50 (Step 3).

If there is the control for the stabilization of vehicle behavior in Step 2, the change in the steering torque based on the change in the braking force due to the control for the stabilization is determined as described above (Step 4).

Next, the steering torque is controlled by controlling the torque added by the actuator 13 as described above so as to cancel out the change in the steering torque (Step 5).

The above-mentioned control is repeated until the vehicle engine stops (Step 6).

With the above-mentioned constitution, when spin or drift is prevented to stabilize vehicle behavior by controlling the braking force of the wheels, the change in the steering torque due to the control for the stabilization can be canceled out smoothly, by controlling the torque of the actuator 13 to be added to the torque for steering applied by the driver; whereby the bad feel of steering can be prevented.

The present invention is not limited by the above-mentioned embodiment. For example, the present invention is applied to a vehicle in which the braking force of the wheels is controlled for stabilization of vehicle behavior in the above-mentioned embodiment. The present invention can also be applied to a vehicle in which driving force of wheels is controlled for stabilization of vehicle behavior, and applied to a vehicle in which both breaking force and driving force are controlled for stabilization of vehicle behavior. In the latter case, the steering torque is controlled so as to cancel out the change in this steering torque based on the change in at least one of the braking force and driving force due to the control for the stabilization. Also, the steering device is not limited to rack and pinion types, ball and screw types can be adopted. Furthermore, type of actuator, type of actuator reduction gear, and the position at which the actuator is connected to the steering mechanism can be established arbitrarily.

## Claims

1. A steering device for a vehicle including means (2 to 7) for transmitting torque for steering applied by the driver to wheels (8), and constituted such that at least one of braking force and driving force of the wheels can be controlled for stabilization of vehicle behavior, wherein the steering torque can be controlled so as to cancel out the change in the steering torque according to the change in at least one of the braking force and driving force due to the control for stabilization, comprising:
a steering shaft (2, 4) for transmitting the torque for steering applied by the driver to the wheels (8);
an actuator (13) for generating torque to be added to the torque applied by the driver;
means (3) for detecting steering torque transmitted by the steering shaft (2, 4); and
means for determining whether there is a risk of spin after oversteering and drift after understeering;
**characterized by**:
means for determining variables corresponding to the change in at least one of the braking force and driving force due to the control for the stabilization;
means for storing relationship between the variables and the change in the steering torque; and
means (50) for controlling the torque added by the actuator (13) so as to cancel out the change in the steering torque determined from the variables determined and the relationship stored; wherein,
when at least one of the braking force and driving force is controlled so that a moment, which is directed opposite to the moment causing the vehicle to spin or drift, acts on the vehicle for the stabilization, steering assistance torque with the same direction as that moment is added by the actuator (13), wherein
in case of spin the braking force/driving force is controlled by making the braking force/driving force for the outer wheels greater/smaller than the braking force/driving force for the inner wheels and in case of drift the braking force/driving force is controlled by making the braking force/driving force for the inner wheels greater/smaller than the braking force/driving force for the outer wheels.

2. The steering device for a vehicle according to claim 1, wherein the variables corresponding to the change in at least one of the braking force and driving force due to the control for the stabilization comprise the amount of change from the start of the control for the stabilization in, at least one of the braking force of each wheel, rotational speed of each wheel, vehicle speed, steering angle, coefficient of friction between the vehicle and road surface, yaw rate of the vehicle, and so on.

3. The steering device for a vehicle according to claim 1 or 2, wherein more types of variables are determined.

## Patentansprüche

1. Lenkvorrichtung für ein Fahrzeug, die eine Einrichtung (2 bis 7) zum Übertragen eines durch den Fahrer ausgeübten Drehmoments zum Lenken auf Räder (8) enthält, und derart gebildet ist, dass wenigstens eine einer Bremskraft und einer Antriebskraft der Räder zur Stabilisierung eines Fahrzeugverhaltens gesteuert werden kann, wobei das Lenkmoment derart gesteuert werden kann, dass die Änderung bezüglich des Lenkmoments gemäß der Änderung bezüglich wenigstens einer der Bremskraft und der Antriebskraft aufgrund der Steuerung zur Stabilisierung ausgelöscht wird, welche Vorrichtung folgendes aufweist:
eine Lenkwelle (2, 4) zum Übertragen des durch den Fahrer ausgeübten Drehmoments zum Lenken auf die Räder (8);
ein Stellglied (13) zum Erzeugen eines Drehmoments, das zu dem durch den Fahrer ausgeübten Drehmoment hinzuzufügen ist;
eine Einrichtung (3) zum Erfassen eines durch die Lenkwelle (2, 4) übertragenen Lenkmoments; und
eine Einrichtung zum Bestimmen, ob es ein Risiko eines Schleuderns nach einem Übersteuern und eines Abtreibens nach einem Untersteuern gibt;
**gekennzeichnet durch**:
eine Einrichtung zum Bestimmen von Variablen entsprechend der Änderung bezüglich wenigstens einer der Bremskraft und der Antriebskraft aufgrund der Steuerung für die Stabilisierung;
eine Einrichtung zum Speichern einer Beziehung zwischen den Variablen und der Änderung bezüglich des Lenkmoments; und
eine Einrichtung (50) zum Steuern des **durch** das Stellglied (13) hinzugefügten Drehmoments, um die Änderung bezüglich des Lenkmoments auszulöschen, das aus den bestimmten Variablen und der gespeicherten Beziehung bestimmt ist; wobei
wenn wenigstens eine der Bremskraft und der Antriebskraft so gesteuert wird, dass ein Moment, das entgegengesetzt zu dem Moment gerichtet ist, das veranlasst, dass das Fahrzeug schleudert oder abtreibt, auf das Fahrzeug für die Stabilisierung wirkt, ein Lenkhilfsmoment mit derselben Richtung wie dieses Moment **durch** das Stellglied (13) hinzugefügt wird, wobei
in einem Fall eines Schleuderns die Bremskraft/Antriebskraft gesteuert wird, indem die Bremskraft/Antriebskraft für die Außenräder größer/kleiner als die Bremskraft/Antriebskraft für die Innenräder gemacht wird, und in einem Fall eines Abtreibens die Bremskraft/Antriebskraft gesteuert wird, indem die Bremskraft/Antriebskraft für die Innenräder größer/kleiner als die Bremskraft/Antriebskraft für die Außenräder gemacht wird.

2. Lenkvorrichtung für ein Fahrzeug nach Anspruch 1, wobei die Variablen entsprechend der Änderung bezüglich wenigstens einer der Bremskraft und der Antriebskraft aufgrund der Steuerung für die Stabilisierung das Änderungsausmaß ab dem Beginn der Steuerung für die Stabilisierung bezüglich wenigstens einer der Bremskraft jedes Rads, einer Drehzahl jedes Rads, einer Fahrzeuggeschwindigkeit, eines Lenkwinkels, eines Reibkoeffizienten zwischen dem Fahrzeug und der Straßenoberfläche, einer Gierrate des Fahrzeugs, usw. aufweisen.

3. Lenkvorrichtung für ein Fahrzeug nach Anspruch 1 oder 2, wobei mehrere Typen von Variablen bestimmt werden.

## Revendications

1. Dispositif de direction pour un véhicule comprenant des moyens (2 à 7) pour transmettre un couple de braquage appliqué par le conducteur à des roues (8), et constitué de sorte qu'au moins une parmi la force de freinage et la force motrice des roues peut être contrôlée en vue de la stabilisation du comportement du véhicule, dans lequel le couple de braquage peut être contrôlé de manière à annuler le changement du couple de braquage en fonction du changement d'au moins une parmi la force de freinage et la force motrice dû au contrôle de la stabilisation, comprenant :
un arbre de direction (2, 4) pour transmettre le couple de braquage appliqué par le conducteur aux roues (8) ;
un actionneur (13) pour générer un couple à ajouter au couple appliqué par le conducteur ;
un moyen (3) pour détecter le couple de braquage transmis par l'arbre de direction (2, 4) ; et
un moyen pour déterminer s'il y a risque de patinage après survirage et de dérive après sous-virage ;
**caractérisé par**
un moyen pour déterminer des variables correspondant au changement d'au moins une parmi la force de freinage et la force motrice dû au contrôle de la stabilisation ;
un moyen pour stocker la relation entre les variables et le changement du couple de braquage ; et
un moyen (50) pour contrôler le couple ajouté par l'actionneur (13) de manière à annuler le changement du couple de braquage déterminé à partir des variables déterminées et de la relation stockée ; dans lequel
lorsqu'au moins une parmi la force de freinage et la force motrice est contrôlée de sorte qu'un moment, dont la direction est opposée au moment causant le patinage ou la dérive du véhicule, agit sur le véhicule en vue de la stabilisation, un couple d'assistance au braquage de même direction que ce moment est ajouté par l'actionneur (13), dans lequel
en cas de patinage, la force de freinage / force motrice est contrôlée en rendant la force de freinage / force motrice appliquée aux roues extérieures supérieure / inférieure à la force de freinage / force motrice appliquée aux roues intérieures et, en cas de dérive, la force de freinage / force motrice est contrôlée en rendant la force de freinage / force motrice appliquée aux roues intérieures supérieure / inférieure à la force de freinage / force motrice appliquée aux roues extérieures.

2. Dispositif de direction pour un véhicule selon la revendication 1, dans lequel les variables correspondant au changement d'au moins une parmi la force de freinage et la force motrice dû au contrôle de la stabilisation comprennent la quantité de changement, à partir du début du contrôle de la stabilisation, dans au moins une parmi la force de freinage de chaque roue, la vitesse de rotation de chaque roue, la vitesse du véhicule, l'angle de braquage, le coefficient de frottement entre le véhicule et la surface de la route, l'amplitude du mouvement de lacet du véhicule, et cetera.

3. Dispositif de direction pour un véhicule selon la revendication 1 ou 2, dans lequel un plus grand nombre de types de variables sont déterminées.
